# FASCICULE DE BREVET EUROPEEN

(11) **EP 0 599 724 B1**
(45) Date de publication et mention de la délivrance du brevet: **28.05.1997**
(21) Numéro de dépôt: 93402835.8
(22) Date de dépôt: 22.11.1993
(51) Int. Cl.: G02B 6/36

(54) **Dispositif de positionnement et de retenue en nappe de fibres optiques**
Vorrichtung zum Positionieren und Festhalten von optischen Fasern in einer Ebene
Device to position and to retain optical fibers in one plane

(30) Priorité: 25.11.1992 FR 9214170
(43) Date de publication de la demande: 01.06.1994
(73) Titulaire: ALCATEL CABLE INTERFACE, F-08330 Vrigne aux Bois (FR)
(72) Inventeur: Hakoun, Roland, F-95330 Domont (FR); Reslinger, Michel, F-91070 Bondoufle (FR); Godard, Gérard, F-94370 Noiseau (FR)
(74) Mandataire: Schaub, Bernard

(56) Documents cités:
- EP-A- 0 340 867
- EP-A- 0 599 723
- DE-A- 3 424 602
- US-A- 5 160 569

## Description

La présente invention porte sur un dispositif de positionnement et de retenue en nappe de fibres optiques, gainées et initialement indépendantes. De tels dispositifs permettent en particulier le raccordement des fibres optiques de deux nappes identiques, obtenues par les procédés connus, de soudure ou d'épissurage, utilisés pour le raccordement des fibres de deux rubans. Ils permettent également de réaliser chacune des opérations préalables au raccordement, telles que de dégainage et de coupe, simultanément sur toutes les fibres de chaque nappe.

Pour le raccordement de deux ensembles de fibres initialement indépendantes, par l'un des procédés appliqués aux rubans de fibres optiques, une méthode connue consiste à créer préalablement un ruban à partir de chacun de ces deux ensembles de fibres. Les fibres gainées sont assemblées côte à côte les unes aux autres par un revêtement commun de résine, constituant le revêtement extérieur du ruban ainsi formé. Cet assemblage en ruban est long et coûteux et nécessite des équipements encombrants. Il solidarise physiquement les fibres les unes aux autres.

Le document EP-A-0340 867 divulgue un dispositif de positionnement en nappe de n fibres optiques. Ce dispositif comporte une embase rectangulaire en u, définissant longitudinalement une base centrale horizontale et deux branches terminales saillantes verticalement sur la base et munies chacune d'une fente verticale prévue axialement sur l'embase et de largeur adaptée au diamètre de chacune de ces fibres, un élément de guidage de ces fibres monté amovible sur la base entre lesdites branches et muni d'une rainure de largeur réglable, ladite rainure s'étendant verticalement sur ledit élément en place sur la base, et étant initialement de largeur sensiblement supérieure au diamètre des fibres et étant sensiblement alignée avec la fente de chacune des branches pour recevoir les fibres superposées, et des moyens de réglage de la largeur de la rainure pour le maintien des fibres superposées les unes sur les autres dans cette rainure selon la nappe alors verticale.

La présente invention a pour but de permettre de traiter une extrémité d'un ensemble de fibres indépendantes de façon analogue à celle d'un ruban, en assurant de manière aisée, rapide et peu coûteuse, le positionnement et la retenue en nappe de ces fibres, ceci sans les lier physiquement les unes aux autres et quel que soit leur nombre, pouvant en particulier être relativement élevé et pouvant varier d'un ensemble à un autre.

Elle a pour objet un dispositif de positionnement et de retenue en nappe de fibres optiques, pour le maintien en nappe de n fibres de diamètre d, comportant une embase sensiblement rectangulaire en "U" constituée par une base horizontale et deux branches terminales et saillantes verticalement sur ladite base et présentant dans au moins l'une desdites branches une fente ayant un premier jambage vertical, parallèle à l'axe longitudinal de l'embase, d'une largeur prédéterminée d et ouvert sur l'extrémité supérieure opposée à ladite base, des moyens constituant une surface rainurée de guidage prévue amovible sur la base et s'etendant entre lesdites branches et munie d'une rainure dont l'un des deux bords est aligné avec l'un des bords de chaque fente, et un moyen de maintien en nappe desdites fibres dans ladite rainure, caractérisé en ce que chaque fente présente un deuxième jambage horizontal, transversal à la direction longitudinale de l'embase, d'une hauteur égale à ladite largeur prédéterminée d, ouvert dans le jambage vertical, et ayant une longueur égale à n fois ladite largeur prédéterminée d, et en ce que ladite rainure est horizontale, d'une largeur égale à n fois ladite largeur prédéterminée d et alignée avec le jambage horizontal de chaque fente, n étant un nombre entier.

Ce dispositif peut avantageusement présenter, en outre, au moins l'une des caractéristiques additionnelles suivantes :
- chaque branche munie de ladite fente comporte une partie dite inférieure, qui est directement solidaire de ladite base et dont la face libre supérieure constitue une surface de référence sur laquelle est défini le jambage horizontal de la fente, et une paire de plots de guidage, dont les deux plots sont rapportés et maintenus côte à côte, non jointifs, sur ladite surface de référence en définissant entre eux le jambage vertical de ladite fente et dont au moins l'un desdits plots de guidage présente une échancrure inférieure, ouverte sur celle de ses faces dite face intérieure située en vis-à-vis de l'autre desdits plots de guidage, définissant le jambage horizontal de ladite fente sur ladite surface de référence.
- ladite paire de plots et ladite surface de référence comportent des moyens complémentaires de maintien en place desdits plots.
- ladite surface rainurée de guidage est constituée par l'une des surfaces dite supérieure d'un support, rapporté et maintenu sur ladite base.
- la face supérieure du support est échancrée et reçoit une plaquette rainurée, montée amovible et rendue interchangeable sur ledit support, sur laquelle est formée ladite rainure.
- ledit moyen de maintien est un couvercle monté articulé parallèlement à ladite rainure sur un bord dit arrière dudit support formant avec ledit support un mandrin de retenue en nappe desdites fibres, ledit mandrin étant lui-même monté amovible sur ladite embase.

Les caractéristiques et avantages de la présente invention ressortiront clairement de la description donnée ci-après d'un exemple préféré de réalisation illustré dans les dessins ci-annexés. Dans ces dessins :
- la figure 1 est une vue schématique en perspective et partiellement éclatée d'un dispositif selon l'invention,
- la figure 2A est une vue de face à échelle agrandie du détail II de la figure 1, montrant une fente de positionnement en nappe d'un ensemble de fibres de ce dispositif,
- la figure 2B correspond à la figure 2A et montre l'ensemble de fibres dans la fente précitée,
- les figures 3A et 3B sont des variantes données en regard des figures 2A et 2B, pour l'obtention d'une fente, dite modifiée, adaptée à un autre ensemble de fibres optiques.
- la figure 4 est une vue de dessus de l'un des éléments, dit mandrin de retenue de fibres optiques, du dispositif de la figure 1,
- la figure 5 est une vue de face d'une embase partiellement équipée du dispositif de la figure 1.

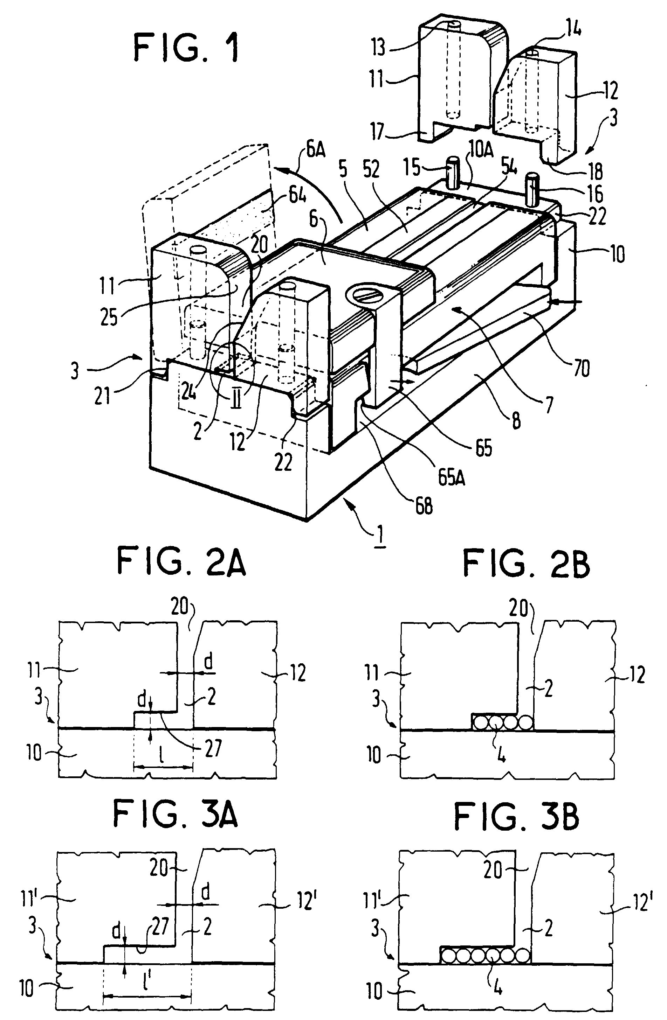

La figure 1, montre que le dipositif de positionnement et de retenue en nappe de fibres optiques comporte une embase 1 en U, présentant une fente 2 en L dans l'une et l'autre de ses deux branches latérales 3. Les deux fentes en L de cette embase sont affectées au positionnement en nappe d'un ensemble donné de fibres optiques gainées 4 (figure 2B). Ce dispositif comporte également un support 5 de guidage de la nappe de fibres, couplant les deux fentes en L, et un moyen de maintien 6, assurant la retenue de la nappe sur le support 5.

Ce support 5 et le moyen de maintien 6 forment avantageusement ensemble un mandrin de retenue en nappe des fibres, qui est monté amovible sur la base 8 de l'embase. Ce mandrin est de préférence analogue à celui décrit dans une autre demande de brevet de la demanderesse (EP-A-0 599 723), de même date de dépôt. Sa description est également faite ci-après.

Les deux branches 3 sont identiques et ont leur fente en L 2, en vis-à-vis d'une branche à l'autre. Chacune d'elles comporte trois parties 10, 11 et 12, entre lesquelles est définie la fente en L de cette branche.

La partie 10 dite inférieure résulte d'un simple épaulement formé directement sur la base 8. Sa surface supérieure 10A constitue une surface de référence. Elle définit le plan d'appui des fibres positionnées en nappe dans la fente en L et ainsi retenues sur le support 5 par le moyen de maintien 6. Le petit jambage horizontal de la fente en L est délimité sur cette surface de référence par les deux autres parties 11 et 12, pour le positionnement en nappe des fibres dans ce jambage horizontal.

Les deux autres parties 11 et 12 de chaque branche 3 sont amovibles sur la partie inférieure 10, ainsi qu'illustré en regard de la branche de droite dans la figure 1. Elles forment une paire de plots de guidage des fibres, de forme globale rectangulaire et de même épaisseur que la partie 10, qui sont rapportés et maintenus côte à côte sur la surface de référence 10A. Les deux plots de guidage d'une même paire sont précisés en les considérant en place ou côte à côte et prêts à être mis en place. Ils sont dits plot arrière de guidage 11 et plot avant de guidage 12, en fonction de leur position.

Pour leur maintien en place, chaque plot présente un trou vertical 13, 14, débouchant sur sa face inférieure et, dans cet exemple illustré, également sur sa face supérieure. La partie inférieure 10 porte en correspondance deux doigts 15 et 16 saillants sur sa surface de référence, recevant les deux plots. Un épaulement 17, 18 saillant au-dessus de leur face inférieure prolonge celle des petites faces verticales dite extérieure de chaque plot de guidage. Il est reçu dans l'un des deux dégagements latéraux 21 et 22 prévus sur la partie inférieure 10 de la branche, permettant un appui de chaque plot sur la surface de référence 10A et supprimant toute liberté de rotation du plot autour de son doigt de montage 15, 16.

On précise la définition de chaque fente, en L, 2 en se référant également à la figure 2A ou 2B. Son jambage vertical est délimité par la face verticale dite intérieure de chacun des plots de guidage. Il est prolongé vers le haut, par une entrée élargie 20 de fibre gaînée individuelle dans la fente 2. Cette entrée 20 est définie avantageusement par la partie terminale supérieure chanfreinée 24 de la petite face verticale intérieure du seul plot avant de guidage 12.

Le plot arrière de guidage 11 est en outre de préférence de hauteur supérieure à celle du plot avant 12, pour des facilités supplémentaires d'insertion de la fibre gainée dans l'entrée 20 et la fente 2. La partie terminale supérieure 25 de la petite face verticale intérieure de ce plot arrière constitue ainsi une butée arrière et un guidage pour l'introduction de la fibre dans l'entrée 20.

L'un des plots de guidage, qui dans cette réalisation est le plot arrière 11, présente une petite échancrure 27 dans sa face inférieure et l'extrémité correspondante de sa petite face verticale intérieure.

Cette échancrure est de hauteur limitée qui correspond à la largeur du jambage vertical de la fente et est choisie quasi-égale au diamètre d des fibres 4 reçues dans la fente 2. Sa longueur, également limitée, à laquelle s'ajoute la largeur d du jambage vertical, donne la longueur globale 1 du jambage horizontal affecté au positionnement, côte-à-côte et de manière jointive, en nappe, de n fibres 4, l étant pratiquement égal à nd. Selon celui des plots arrière ou avant qui présente cette petite échancrure, la fente 2 a une forme en L inversé ou non.

Les figures 3A et 3B, données en variante des figures 2A et 2B et de la figure 1, correspondent à l'obtention d'une fente adaptée 2', pour le positionnement en nappe d'un autre ensemble de fibres, tel que de n fibres 4 identiques aux fibres précédentes ou d'un nombre donné de fibres de diamètre différent de celui des précédentes.

Cette fente 2' est définie par une autre paire de plots de guidage 11' et 12', se substituant à la paire précédente sur la partie inférieure 10 de chaque branche latérale.

Ces plots de guidage 11' et 12' sont semblables aux plots 11 et 12, à l'exception de leurs côtes dimensionnelles qui permettent l'obtention de la largeur d du jambage vertical et de la hauteur d et de la longueur l' du jambage horizontal de la fente en L, 2' qu'ils définissent entre eux, quand ils sont en place sur les mêmes deux doigts 15 et 16 prévus sur la partie inférieure 10 (figure 1).

Ils ne sont donc pas décrits de manière plus détaillée. On précise uniquement que la jambage vertical de la fente 2' se trouve décalé par rapport à celui de la fente 2 pour que les jambages horizontaux de ces deux fentes restent centrés sur un même axe longitudinal du support 5.

Dans une autre variante de réalisation, les deux plots de chaque paire ont une échancrure dans leur face inférieure. Ils définissent alors entre eux et sur la surface 10A une fente dite en T renversé, dont le jambage vertical peut correspondre à l'axe longitudinal du support 5.

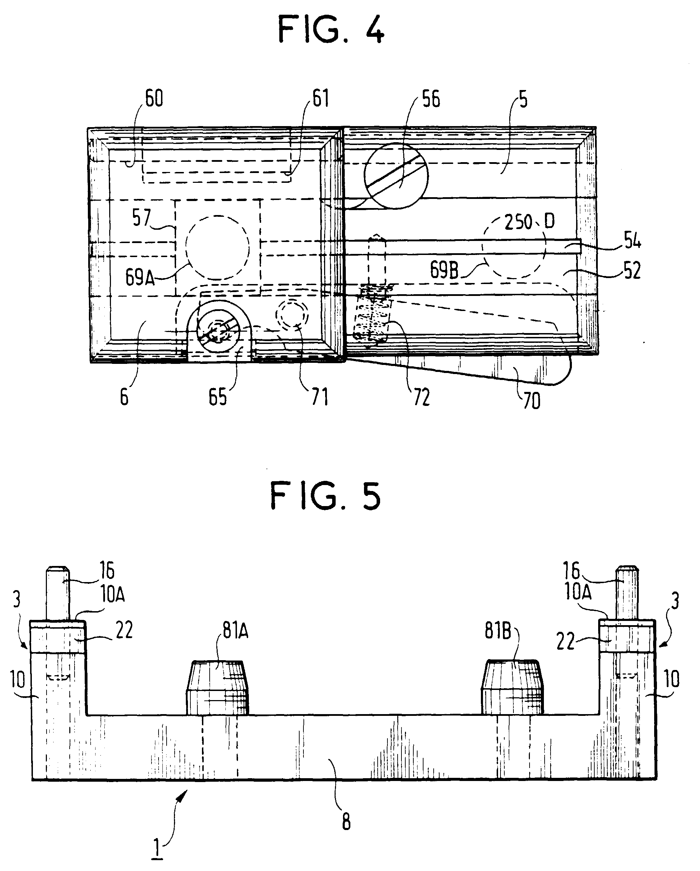

Le mandrin 7 est décrit en regard de la figure 1 ou 4.

Il comporte le support 5, qui est de forme rectangulaire et est relativement plat, une plaquette rainurée 52, montée amovible dans une échancrure complémentaire prévue à son effet dans la face supérieure du support, et un couvercle constituant le moyen de maintien précité 6, qui est rabattable sur le support et la plaquette en place. La plaquette 52 présente une rainure 54 en U sur l'axe longitudinal de sa face supérieure. Cette rainure est affectée à une nappe donnée de fibres. Une vis 56 assure le blocage de la plaquette rainurée en place, les surfaces supérieures du support et de la plaquette étant alors à niveau.

Cette vis 56 permet de retirer la plaquette en place et de la remplacer par une autre plaquette semblable, dont la rainure est de section différente et est affectée à une autre nappe de fibres, en correspondance avec la fente 2 de chacune des branches de l'embase du dispositif.

La plaquette 52, ou toute autre plaquette semblable, présente un élément de rétention 57 de la nappe de fibres en place dans sa rainure. Cet élément interrompt la rainure et est situé en regard du couvercle.

Ce couvercle 6 est articulé autour d'un axe 60 le solidarisant au support, à proximité d'un bord dit bord arrière de celui-ci, et présente à cet effet une patte alésée 61 saillante sous son bord correspondant arrière. En position de fermeture, il s'étend sur la largeur du support, mais ne recouvre de préférence qu'une partie terminale droite ou en variante gauche du support. Selon sa disposition, il définit avec le support un mandrin droit ou en variante un mandrin gauche symétrique du précédent. La flèche 6A traduit sa mise en position d'ouverture. Ce couvercle est équipé d'une bande élastique déformable 64, saillante sur sa face intérieure, assurant la retenue de la nappe de fibres en place dans la rainure 54, quand il est fermé et verrouillé en fermeture.

Un crochet 65, solidaire du bord avant du couvercle assure ce verrouillage en fermeture. L'extrémité 65A de celui-ci vient s'encliqueter sous le bord avant du support. Un logement 68 prévu dans la face inférieure du support reçoit cette extrémité 65A. Une manette 70 est également montée dans ce logement 68. Elle est articulée autour d'un axe 71 ancré dans le support pour pivoter parallèlement à ce support et en regard de l'extrémité 65A du crochet. Elle est sollicitée en position inactive par un ressort 72 et actionnée à l'encontre de l'action du ressort pour libérer l'extrémité du crochet, poussé hors du logement, et pour permettre l'ouverture complète à la main du couvercle.

Le support 5 présente en outre deux trous 69A, 69B, ou autres moyens analogues dans sa face inférieure, pour le montage du mandrin sur l'embase en U.

La figure 5 montre en correspondance que cette embase présente deux doigts 81A, 81B, ou autres, complémentaires des trous 69A, 69B et saillants sur sa base 8. Ces doigts sont centrés sur l'axe longitudinal médian de la base mais sont de préférence décalés différemment de la branche droite ou gauche la plus proche de chacun d'eux, pour réaliser un détrompage de montage de mandrin dit gauche ou droit sur cette embase.

Le mandrin et l'embase sont avantageusement métalliques et l'embase aimantée. Le maintien en place de ce mandrin sur l'embase peut être renforcé par cette aimantation de l'embase métallique. Le mandrin 7 étant en place sur l'embase 1 (figure 1), le fond de la rainure 54 et la surface de référence 10A définie sur chacune des branches latérales 3 sont dans le même plan.

En variante donnée relativement à la figure 1, on indique que le support de guidage 5 précité peut être directement formé par la base de l'embase, dite alors base de guidage, dont la surface supérieure reçoit et retient à l'aide d'un moyen de maintien la nappe de fibres constituée dans le jambage horizontal des fentes des branches latérales. Dans cette variante, cette base de guidage est avantageusement échancrée pour le montage d'une plaquette rainurée adaptée aux deux fentes définies sur les branches. L'échancrure de cette base de guidage peut être réalisée sur la longueur de celle-ci, ou sur une partie importante de sa largeur permettant dans ces dernières conditions la mise en place d'une plaquette rainurée convenable depuis le bord avant de la base de guidage.

En variante également, le dispositif ne comporte qu'une fente adaptable, sur l'une seule des branches de l'embase tandis que l'autre branche laisse les fibres libres. Cette seule branche fendue est de préférence celle proche du moyen de maintien de la nappe de fibres sur le support de guidage ou la base de guidage.

## Revendications

1. Dispositif de positionnement et de retenue en nappe de fibres optiques, pour le maintien en nappe de n fibres (4) de diamètre d, comportant une embase sensiblement rectangulaire en "U" (1) constituée par un base horizontale (8) et deux branches (3) terminales et saillantes verticalement sur ladite base et présentant dans au moins l'une desdites branches une fente (2) ayant un premier jambage vertical, parallèle à l'axe longitudinal de l'embase, d'une largeur prédéterminée d et ouvert (20) sur l'extrémité supérieure opposée à ladite base, des moyens constituant une surface rainurée de guidage (52), amovible sur la base et s'étendant entre lesdites branches et munie d'une rainure (54) dont l'un des deux bords est aligné avec l'un des bords de chaque fente, et un moyen de maintien (6) en nappe desdites fibres dans ladite rainure, caractérisé en ce que chaque fente (2) présente un deuxième jambage horizontal (27), transversal à la direction longitudinale de l'embase, d'une hauteur égale à ladite largeur prédéterminée d ouvert dans le jambage vertical, et ayant une longueur (l;l') égale à n fois ladite largeur prédéterminée d, et en ce que ladite rainure (54) est horizontale, d'une largeur égale à n fois ladite largeur prédéterminée d et alignée avec le jambage horizontal de chaque fente, n étant un nombre entier.

2. Dispositif selon la revendication 1, caractérisé en ce que chaque branche (3) munie de ladite fente comporte une partie dite inférieure (10), qui est directement solidaire de ladite base et dont la face libre supérieure constitue une surface de référence (10A) sur laquelle est défini le jambage horizontal de la fente, et une paire de plots de guidage (11, 12; 11', 12'), dont les deux plots sont rapportés et maintenus côte à côte, non jointifs, sur ladite surface de référence (10A) en définissant entre eux le jambage vertical de ladite fente, et dont au moins l'un desdits plots de guidage présente une échancrure inférieure (27), ouverte sur celle de ses faces dite face intérieure située en vis-à-vis de l'autre desdits plots de guidage, définissant le jambage horizontal de ladite fente sur ladite surface de référence (10A).

3. Dispositif selon la revendication 2, caractérisé en ce qu'il comporte plusieurs jeux de paires de plots (11, 12; 11', 12'), associées à l'embase, interchangeables sur ladite surface de réference (10A) mais différentes de l'une des paires à l'autre pour l'adaptation des dimensions desdits jambages de la fente à la valeur du diamètre et au nombre n desdites fibres à positionner en nappe.

4. Dispositif selon l'une des revendications 2 et 3, caractérisé en ce que les plots (11, 12) de chaque paire et ladite surface de référence (10A) comportent des moyens complémentaires (13, 14, 15, 16) de maintien en place desdits plots.

5. Dispositif selon l'une des revendications 2 à 4, caractérisé en ce que chaque fente (2) comporte une entrée élargie (20) de fibre individuelle, prolongeant ledit jambage vertical jusqu'à l'extrémité supérieure de la branche concernée, définie par un chanfrein terminal (24) sur la petite face intérieure d'au moins l'un des plots de guidage.

6. Dispositif selon l'une des revendications 2 à 5, caractérisé en ce que l'un desdits plots (11, 12) considérés en place sur ladite surface de référence (10A) est de hauteur sensiblement supérieure à celle de l'autre plot (12) de la même paire.

7. Dispositif selon l'une des revendications 2 à 6, caractérisé en ce que les plots (11, 12) de chaque paire comportent un épaulement terminal inférieur (17, 18), prolongeant leur face extérieure opposée à ladite face intérieure de chacun d'eux, et ladite partie inférieure (10) présente deux dégagements latéraux (21, 22) recevant lesdits épaulements inférieurs (17, 18) des plots de guidage.

8. Dispositif selon l'une des revendications 1 à 7, caractérisé en ce que ladite surface rainurée de guidage (54) est constituée par l'une des surfaces dite supérieure d'un support (5), rapporté et maintenu sur ladite base.

9. Dispositif selon la revendication 8 caractérisé en ce que la face supérieure dudit support (5) en place est échancrée et reçoit une plaquette rainurée (52), montée amovible et rendue interchangeable sur ledit support, sur laquelle est formée ladite rainure (54).

10. Dispositif selon l'une des revendications 8 et 9, caractérisé en ce que ledit moyen de maintien (6) est un couvercle monté articulé parallèlement à ladite rainure (54) sur un bord dit arrière dudit support (5), formant avec ledit support (5) un mandrin (7) de retenue en nappe desdites fibres, ledit mandrin étant monté amovible sur ladite embase (1).

11. Dispositif selon la revendication 10, caractérise en ce que ledit couvercle (6) est équipé d'un crochet (65) de verrouillage en fermeture dudit couvercle sur ledit support (5), monté solidaire d'un bord dit avant du couvercle et encliquetable sous le bord correspondant avant dudit support (5), et en ce que ledit support (5) est équipé d'une manette (70), de déverrouillage dudit crochet encliqueté, montée pivotante dans ledit support en regard dudit crochet et actionnable depuis le bord dit avant dudit support.

12. Dispositif selon l'une des revendications 1 à 11, caractérisé en ce que la fente (2) de chaque branche (3) de l'embase présente une forme en "L".

13. Dispositif selon l'une des revendications 1 à 11, caractérisé en ce que la fente de chaque branche présente une forme en "T" renversé.

## Patentansprüche

1. Vorrichtung zur Positionierung und zum Halten von Lichtleitfasern in einer Schicht von n Fasern (4) mit einem Durchmesser d, wobei die Vorrichtung einen im wesentlichen rechteckigen U-förmigen Sockel (1) besitzt, der aus einer waagrechten Basis (8) und zwei senkrecht von der Basis vorstehenden Endzweigen (3) besteht und in mindestens einem der Zweige einen Schlitz (2) mit einem ersten senkrechten Teil vorbestimmter Breite parallel zur Längsachse des Sokkels und zum dieser Basis entgegengesetzten oberen Ende hin geöffnet (20) aufweist, wobei weiter Mittel vorgesehen sind, die eine mit Nut versehene Führungsfläche (52) bilden und lösbar auf der Basis vorgesehen sind sowie sich zwischen den Zweigen erstrecken und mit einer Nut (54) versehen sind, deren einer Rand mit einem der Ränder jedes Schlitzes fluchtet, und ein Mittel (6), um die Fasern in der Nut in einer Schicht zu halten, dadurch gekennzeichnet, daß jeder Schlitz (2) einen zweiten waagrechten Teil (27) quer zur Längsrichtung des Sockels aufweist, dessen Höhe gleich der vorbestimmten Breite d der Fasern und zum senkrechten Teil hin offen ist und deren Länge (1, 1') n mal die vorbestimmte Breite beträgt, und daß die Nut (54) waagrecht verläuft, ihre Breite n mal der vorbestimmten Breite d entspricht und sie mit dem waagrechten Teil jedes Schlitzes fluchtet, wobei n eine ganze Zahl ist.

2. Vorrichtung nach Anspruch 1, dadurch gekennzeichnet, daß jeder mit Schlitz versehene Zweig (3) einen unteren Bereich (10), der direkt Teil der Basis ist und dessen freie obere Seite eine Bezugsfläche (10A) bildet, auf der der waagrechte Teil des Schlitzes definiert ist, und ein Paar von Führungsklötzen (11, 12; 11', 12') enthält, deren beide Klötze nebeneinander, aber nicht aneinander angrenzend auf der Bezugsfläche (10A) aufgesetzt sind und gehalten werden, indem sie zwischen sich den senkrechten Teil des Schlitzes definieren, und von denen mindestens einer eine untere Einkerbung (27) aufweist, die auf derjenigen Seite offen ist, die untere Seite genannt wird und sich gegenüber dem anderen Führungsklotz befindet und den waagrechte Teil des Schlitzes auf der Bezugsfläche (10A) definiert.

3. Vorrichtung nach Anspruch 2, dadurch gekennzeichnet, daß sie mehrere unterschiedliche Sätze von Paaren von Klötzen (11, 12; 11', 12') besitzt, die dem Sockel zugeordnet und auf der Bezugsfläche (10A) austauschbar sind, um die Abmessungen der Teile des Schlitzes an den Wert des Durchmessers und die Anzahl n der in einer Schicht anzuordnenden Fasern anzupassen.

4. Vorrichtung nach einem der Ansprüche 2 und 3, dadurch gekennzeichnet, daß die Klötze (11, 12) jedes Paars und die Bezugsfläche (10A) komplementäre Mittel (13, 14, 15, 16) zum Festhalten der Klötze besitzen.

5. Vorrichtung nach einem der Ansprüche 2 bis 4, dadurch gekennzeichnet, daß jeder Schlitz (2) einen erweiterten Eingang (20) für eine einzelne Faser aufweist, der den senkrechten Teil bis zum oberen Ende des entsprechenden Zweigs verlängert und durch eine Endabschrägung (24) auf der kleinen Innenseite mindestens eines der Führungsklötze definiert ist.

6. Vorrichtung nach einem der Ansprüche 2 bis 5, dadurch gekennzeichnet, daß einer der Klötze (11, 12), wenn sie sich auf der Bezugsfläche (10A) befinden, eine merklich größere Höhe als der andere Klotz (12) des gleichen Paars hat.

7. Vorrichtung nach einem der Ansprüche 2 bis 6, dadurch gekennzeichnet, daß die Klötze (11, 12) jedes Paars eine untere Endschulter (17, 18) aufweisen, die ihre ihrer Innenseite entgegengesetzte Außenseite verlängern, und daß der untere Bereich (10) zwei seitliche Ausschnitte (21, 22) besitzt, die die unteren Endschultern (17, 18) der Führungsklötze aufnehmen.

8. Vorrichtung nach einem der Ansprüche 1 bis 7, dadurch gekennzeichnet, daß die mit Nut versehene Führungsoberfläche (54) von einer Oberseite eines Trägers (5) gebildet wird, der auf die Basis aufgebracht und auf ihr gehalten wird.

9. Vorrichtung nach Anspruch 8, dadurch gekennzeichnet, daß die Oberseite des Trägers (5) eine Nut aufweist zur Aufnahme einer mit Nut versehenen Platte (52), die abnehmbar und austauschbar auf dem Träger montiert ist, wobei auf dieser Platte die Nut (54) ausgebildet ist.

10. Vorrichtung nach einem der Ansprüche 8 und 9, dadurch gekennzeichnet, daß das Haltemittel (6) ein Deckel ist, der parallel zur Nut (54) an einem rückwärtigen Rand des Trägers (5) angelenkt ist und zusammen mit dem Träger (5) ein Haltefutter (7) für die Fasern in einer Schicht bildet, wobei das Futter vom Sockel (1) abnehmbar ist.

11. Vorrichtung nach Anspruch 10, dadurch gekennzeichnet, daß der Deckel (6) einen Verriegelungshaken (65) zum Verschließen des Deckels auf dem Träger (5) enthält, wobei der Haken am vorderen Rand des Deckels befestigt ist und unter den entsprechenden Rand des Trägers (5) eingehakt werden kann, und daß der Träger (5) einen von Hand zu betätigenden Entriegelungshebel für den eingerasteten Haken besitzt, der am Träger schwenkbar in Höhe des Hakens montiert ist und vom vorderen Rand des Trägers aus betätigt werden kann.

12. Vorrichtung nach einem der Ansprüche 1 bis 11, dadurch gekennzeichnet, daß der Schlitz (2) jedes Zweigs (3) des Sockels L-förmig ist.

13. Vorrichtung nach einem der Ansprüche 1 bis 11, dadurch gekennzeichnet, daß der Schlitz jedes Zweigs die Form eines umgekehrten T besitzt.

## Claims

1. A device for positioning and retaining optical fibers in a layer, to keep n fibers (14) of diameter d in a layer, the device including a substantially rectangular channel-section base constituted by a horizontal web (8) and two end flanges (3) projecting vertically from said web, at least one of said flanges being provided with a slot (2) having a vertical first segment, parallel to the longitudinal axis of the base, of predetermined width d, and open (20) at the top end of the flange, the top end being the end opposite from said web, means constituting a grooved guide surface (52) removably provided on the web and extending between said flanges and provided with a groove (54), one of the two edges of which is aligned with one of the edges of each slot, and retaining means (6) for retaining said fibers in a layer in said groove, the device being characterized in that each slot (2) presents a horizontal second segment (27), transverse to the longitudinal direction of the base, of height equal to said predetermined width d, open in the vertical section, and having a length (l, l') equal to n times said predetermined width d, and in that said groove (54) is horizontal, of width equal to n times said predetermined width d, and aligned with the horizontal segment of each slot, n being a whole number.

2. A device according to claim 1, characterized in that each flange (3) provided with said slot includes firstly a "bottom" portion (10) which is formed directly on said web, the free top face of the bottom portion constituting a reference surface (10A) on which the horizontal segment of the slot is delimited, and secondly a pair of guide blocks (11, 12, 11', 12'), the two blocks being mounted and retained side-by-side and not touching each other on said reference surface (10A), and co-operating to delimit the vertical segment of said slot between them, at least one of said guide blocks having a bottom recess (27) open at its "inner" face which is that one of its faces which is situated facing the other guide block, which recess delimits the horizontal segment of said slot on said reference surface (10A).

3. A device according to claim 2, characterized in that it includes a plurality of sets of pairs of blocks (11, 12; 11', 12'), associated with the base, that can be mounted interchangeably on said reference surface (10A), but different from each other in order to adapt the dimensions of said segment of the slot to the value of the diameter and to the number n of said fibers to be positioned in a layer.

4. A device according to claim 2 or 3, characterized in that the blocks (11, 12) in each pair and said reference surface (10A) include complementary means (13, 14, 15, 16) for holding said blocks in place.

5. A device according to any one of claims 2 to 4, characterized in that each slot (2) includes an enlarged entrance (20) for inserting an individual fiber, which entrance extends said vertical segment up to the top end of the flange in question, and is delimited by a bevelled end portion (24) on the small inner face of at least one of the guide blocks.

6. A device according to any one of claims 2 to 5, characterized in that, when the blocks (11, 12) are in place on said reference surface (10A), one of said blocks is substantially higher than the other block (12) of the same pair.

7. A device according to any one of claims 2 to 6, characterized in that each one of the blocks (11, 12) in each pair includes a bottom end shoulder (17, 18) extending its outer face which is opposite from said inner face, and said bottom portion (10) has two end notches (21, 22) receiving said bottom shoulders (17, 18) of the guide blocks.

8. A device according to any one of claims 1 to 7, characterized in that said grooved guide surface (54) is constituted by a "top" surface of a support (5) mounted and retained on said web.

9. A device according to claim 8, characterized in that the top face of said support (5) in place is recessed and receives a grooved plate (52) removably and interchangeably mounted on said support, said groove (54) being formed in said plate.

10. A device according to claim 8 or 9, characterized in that the retaining means (6) are a cover that is hinge mounted parallel to said groove (54) on a "rear" edge of said support (5), which cover co-operates with said support (5) to form a clamp (7) for retaining said fibers in a layer, said clamp being removably mounted on said base (1).

11. A device according to claim 10, characterized in that said cover (6) is equipped with a catch (65) for locking said cover closed on said support (5), which catch is secured to a "front" edge of the cover and can be snap-fastened under the corresponding front edge of said support (5), and in that said support (5) is equipped with a lever (70) for unlocking said snap-fastened catch, which lever is pivotally mounted in said support facing said catch and can be operated from the "front" edge of said support.

12. A device according to any one of claims 1 to 11, characterized in that the slot (2) in each flange (3) of the base is L-shaped.

13. A device according to any one of claims 1 to 11, characterized in that the slot in each side flange is in the shape of an inverted "T".
